# EUROPÄISCHE PATENTSCHRIFT

(11) **EP 1 800 789 B1**
(45) Veröffentlichungstag und Bekanntmachung des Hinweises auf die Patenterteilung: **11.05.2011**
(21) Anmeldenummer: 06022685.9
(22) Anmeldetag: 31.10.2006
(51) Int. Cl.: B23K 26/04, B23K 26/24, B23K 26/20

(54) **Verfahren und Vorrichtung zum Fügen von mindestens zwei Werkstücken mittels Energiestrahl und als Tastelement verwendetem Zusatzwerkstoff zur Nahtführung**
Process and device for joining at least two workpieces with laser beam and filler material, the latter used as a guiding contact element along the joining line
Procédé et dispositif d'assemblaged'au moins deux pièces avec un faisceau laser et un matériau d'apport utilisé comme élément de guidage par contact le long de la zone d'assemblage

(30) Priorität: 22.12.2005 DE 102005061452
(43) Veröffentlichungstag der Anmeldung: 27.06.2007
(73) Patentinhaber: Volkswagen Aktiengesellschaft, 38436 Wolfsburg (DE)
(72) Erfinder: Jäckel, Torsten, 38176 Wendeburg (DE); Hanschmann, Florian, 38102 Braunschweig (DE); Schiwy, Sören, 38102 Braunschweig (DE)
(74) Vertreter: Pohlmann, Bernd Michael

(56) Entgegenhaltungen:
- EP-A- 1 157 770
- DE-A1- 3 905 684
- DE-A1- 19 750 586
- DE-C2- 10 006 852
- JP-A- 4 157 079
- JP-A- 4 361 887
- JP-A- 11 300 485

## Beschreibung

Die Erfindung betrifft ein Verfahren und eine Vorrichtung zum Fügen von Werkstücken gemäß den Oberbegriffen der Patenansprüche 1 und 8 (siehe, z.B., DE 100 06 852 C2).

Verfahren zum Fügen von Werkstücken mittels eines Energiestrahls und eines Zusatzwerkstoffs werden in jüngster Zeit zunehmend in der Automobilindustrie eingesetzt. Der Energiestrahl kann dabei ein Laserstrahl oder ein Elektronenstrahl sein, mit dem die Werkstücke gelötet oder geschweißt werden. Diese Fügeverfahren ermöglichen es, anspruchsvolle Qualitätskriterien, wie sie beispielsweise im Hinblick auf die Oberflächenqualität einer Sichtnaht erfüllt werden müssen, zu erreichen. Als Sichtnaht wird dabei eine im Kundensichtbereich liegende Fügenaht bezeichnet, die allerdings auch durch eine Lackschicht abgedeckt sein kann. Mit einer Sichtnaht wird beispielsweise die Dach-Seitenteilverbindung bei Pkw's realisiert. Die Oberfläche einer Sichtnaht sollte besonders glatt und beständig gegenüber Korrosionsprozessen sein.

Beim Schweißen oder Löten mittels eines Laserstrahls und eines Drahtes wird vom Laserstrahl die Drahtspitze während des Fügens abgeschmolzen und damit Material für die Fügenaht zur Verfügung gestellt. Dabei spielen die relative Positionen von Laserstrahl, Drahtspitze und Fügestoß eine entscheidende Rolle für die Qualität der hergestellten Naht. Zur optimalen Führung des Drahtes ist aus der DE 100 06 852 C2 bereits bekannt, den Draht als Tastelement zu verwenden, wobei die an dem Energiestrahl abschmelzende Drahtspitze entlang der Werkstückoberfläche geführt wird. Dabei wird der Draht als mechanisches Tastelement benutzt und tastet über seine Spitze den Rand der unmittelbaren Schweiß- beziehungsweise Lötstelle und die Kontur des von den zu verbindenden Werkstückteilen definierten Stoßes ab, wobei die Drahtspitze kraftschlüssig entlang der Werkstückoberfläche geführt wird. Insbesondere bei Herstellung einer Bördel- oder Kehlnaht erlaubt die Stoßform auch in seitlicher Richtung eine kraftschlüssig Führung der am Laserstrahlrand abschmelzenden Drahtspitze. Der Draht wird bei dem bekannten Verfahren mittels einer Drahtzuführungseinrichtung mit einer bestimmten Drahtvorschubgeschwindigkeit und einem festen Drahteinlaufwinkel von 45° relativ zum Fügestoß zugeführt, wobei Nahtaussetzer vermieden werden müssen. Die kraftschlüssige Führung der Drahtspitze kann über die Gravitationskraft eine Feder, einen pneumatischen oder hydraulischen Antrieb mit bestimmtem Druck, einen elektrischen Motor mit bestimmtem Drehmoment oder über Sensoren und damit geregelt geführte Aktoren erfolgen. Zur Fokussierung des Laserstrahls ist eine Fokussiereinrichtung vorgesehen, die mit festem Abstand zur Werkstückoberfläche geführt oder mit der Drahtzuführungseinrichtung mitbewegt wird. Dabei können Laserstrahl und Zusatzdraht auch synchron und fest miteinander verkoppelt nachgeführt werden.

Aus dem Dokument EP 1 157 770 A2 ist ein Laserlötkopf bekannt bei dem der Lötdraht und das Laserrohr durch Justieröffnungen in einem Justageplättchen in ihrer Anordnung zueinander sowie zum Lötspalt fixiert sind. Dabei ist während der Nahtbildung ein Drahteinlaufwinkel relativ zur Naht von weniger als 44 ° eingestellt. Aus dem Dokument DE 39 05 684 A1 ist ein Verfahren zum Auftragschweißen bekannt, bei dem das Anschmelzen eines Grundwerkstoffs durch eingeführten Energiestrahl erfolgt, während der Beschichtungswerkstoff in Form eines Drahtes oder zweier Drähte im Nachlauf des Energiestrahls zugeführt wird. Ein Heißdraht wird unter einen Einstellwinkel von 20 bis 40 ° bezogen auf die Ebene des Grundwerkstoffs zugeführt. Ferner ist aus dem Dokument JP 11 300385 A ein Verfahren zum Laserschweißen von Aluminiumlegierungen bekannt, bei dem ein Zusatzmaterial in Kontakt mit dem zu schweißenden Material in einem Winkel von weniger als 44 ° zur Ebene des zu schweißenden Materials gebracht wird.

Das der vorliegenden Erfindung zugrunde liegende Problem, besteht in der Verbesserung des bekannten Standes der Technik, insbesondere zur Erhöhung der Prozesssicherheit und Verminderung von Material- und Energieverbrauch bei der Herstellung von Fügenähten mit hoher Oberflächenqualität.

Das genannte Problem wird erfindungsgemäß mit den Merkmalen der Patentansprüche 1 und 8 gelöst. Vorteilhafte Weiterbildungen und Ausgestaltungen der Erfindung sind den Unteransprüchen zu entnehmen.

Überaschenderweise kann bei dem erfindungsgemäßen Verfahren eine beträchtliche Einsparung an Zusatzwerkstoff sowie eine Reduzierung der erforderlichen Leistung des Energiestrahls bei gleicher Fügegeschwindigkeit erreicht werden, ohne dass es zu einem Nahtaussetzer kommt. Der Fügestoß kann durch einen Spalt zwischen den Werkstücken oder den Randbereich eines auf ein anderes Werkstück aufgetragenen Werkstücks gebildet sein.

Bei einer vorteilhaften Weiterbildung der Erfindung ist vorgesehen, dass der Drahtvorschub um mindestens 5%, vorzugsweise mindestens 10%, 15%, 20% relativ zu dem Drahtvorschub bei einem Drahteinlaufwinkel von 45° vermindert wird, bei jeweils gleicher Fügegeschwindigkeit. Insbesondere kann bei Herstellung einer Naht zwischen zwei Werkstücken mit einem vorgegebenen Fügespalt und einem vorgegebenen Durchmesser des Drahts der Drahtvorschub um mindestens 5%, vorzugsweise mindestens 10%, 15%, 20% relativ zum Drahtvorschub bei einem Einlaufwinkel von 45° vermindert werden bei jeweils gleicher Fügegeschwindigkeit.

Es kann auch bei jeweils gleicher Fügegeschwindigkeit die Leistung des Energiestrahls um mindestens 5%, vorzugsweise 10%, 15%, 20% relativ zu einem Drahteinlaufwinkel von 45° vermindert werden, insbesondere bei dem Fügen von Werkstücken mit einem zwischen den Werkstücken angeordneten Fügespalt und einem vorgegebenen Drahtdurchmesser.

In einer Weiterbildung der Erfindung wird der Drahteinlaufwinkel in Abhängigkeit von Parametern, wie dem Werkstückmaterial, dem Zusatzwerkstoffmaterial, einer Fügespaltbreite, eines Drahtdurchmessers und/oder der Fügegeschwindigkeit verändert um eine Verminderung des Verbrauchs an Zusatzwerkstoff und/oder der erforderlichen Leistung des Energiestrahls zu erreichen. Besonders vorteilhaft ist die Wahl eines Drahteinlaufwinkels bei dem der Verbrauch an Zusatzwerkstoff und/oder die erforderliche Leistung des Energiestrahls minimal ist, ohne dass Nahtaussetzer auftreten.

Wenn der Draht als mechanisches Tastelement verwendet wird, lässt sich auf eine besonders einfache Weise eine Integration der Drahtzuführung mit einer Robotersteuerung des Energiestrahls erreichen, da Abweichungen des Fügestoßes unabhängig von der Robotersteuerung durch die Drahtzuführung korrigiert werden können und damit geringere Anforderungen an die Steuerfähigkeit des Roboters zu stellen sind. Besonders vorteilhaft ist es, wenn die Drahtspitze kraftschlüssig entlang der Werkstückoberfläche, vorzugsweise im Bereich des Fügestoßes geführt wird. Der Draht kann dabei relativ zur Naht schleppend oder stechend geführt werden.

Das erfindungsgemäße Verfahren kann sowohl zum Löten als auch zum Schweißen eingesetzt werden. Beim Laserlöten wird mit einem defokussierten oder wenig fokussiertem Laserstrahl gearbeitet, während beim Laserschweißen der Laserstrahl fokussiert wird und nahezu im Fokus auf die Werkstückoberfläche auftrifft. Beim Laserschweißen werden daher höhere Energieintensitäten erreicht als beim Laserlöten, so dass die Oberfläche des Werkstücks zum Schmelzen gebracht und sich mit dem Zusatzwerkstoff verbindet. Als Zusatzwerkstoff kann daher beim Laserschweißen von Stahlwerkstücken Stahl verwendet werden, während beim Laserlöten von Stahlwerkstücken beispielsweise eine Kupferlegierung eingesetzt wird. Da beim Laserschweißen mit einem fokussierten Strahl gearbeitet wird, wird üblicherweise ein Zusatzdraht mit einem relativ geringeren Durchmesser als beim Laserlöten verwendet, was bisher eine schlechtere Spaltüberbrückbarkeit zur Folge hatte. Allerdings wird beim Laserschweißen das Grundproblem der Kontaktkorrosion, welches beim Löten, beispielsweise von Kupfer-Stahlverbindungen auftritt, vollständig vermieden. Ferner treten prozessbedingt keine Mikroporen auf so dass ein weiteres Korrosionsrisiko vermieden werden kann. Das erfindungsgemäße Verfahren ist besonders zur Herstellung von Sichtnähten zwischen Karosserieteilen geeignet.

Das erfindungsgemäße Verfahren ist sowohl für Laserschweißen und Laserlöten sowie für Elektronenstrahlfügen geeignet.

Bei der erfindungsgemäßen Vorrichtung ist vorgesehen, dass die Einstellung des Drahteinlaufwinkels veränderbar ist. Der jeweilige Wert des Drahteinlaufwinkels wird dabei so gewählt, dass eine Material- oder Energieeinsparung erreicht wird., ohne dass Nahtaussetzer auftreten.

Mittels einer Fokussiereinrichtung kann der Energiestrahl auf einen Bereich der Drahtspitze und/oder der Werkstoffoberfläche fokussiert werden, wobei die Fokussiereinrichtung relativ zur Drahtzuführungseinrichtung fest oder bewegbar ausgebildet sein kann.

Weitere vorteilhafte Ausführungsformen sind auch unabhängig von ihrer Zusammenfassung in den Ansprüchen der nachfolgenden Beschreibung von Ausführungsbeispielen anhand von Zeichnungen zu entnehmen.

Dabei zeigt sich in schematischer Darstellung
- Figur 1: in Seitenansicht eine erfindungsgemäße Vorrichtung mit einer Einrichtung zur Erzeugung eines Energiestrahls, einer Fokussiereinrichtung für den Energiestrahl und einer Drahtzuführungseinrichtung
- Figur 2: in Seitenansicht eine erfindungsgemäßen Vorrichtung im Bereich eines Drahts aus Zusatzmaterial mit einem abschmelzendem Laserstrahl.

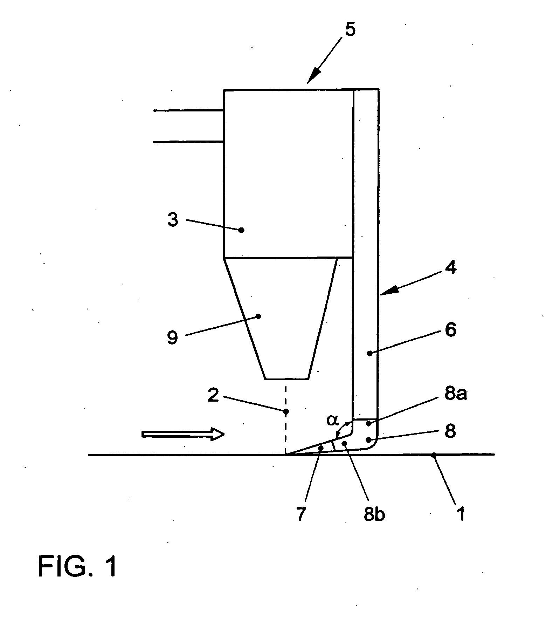

In Figur 1 ist eine Vorrichtung zum Fügen von zumindest zwei Werkstücken im Bereich eines Fügestoßes 1 mittels eines Laserstrahls 2 schematisch dargestellt. Die Vorrichtung umfasst eine Einrichtung zur Erzeugung des Laserstrahls 3, eine Einrichtung zur Drahtzuführung 4 sowie eine Einrichtung zur Fokussierung des Laserstrahls 9. Die Fokussiereinrichtung 9 umfasst beispielsweise eine Fokussierlinse. Die Einrichtung 4, gemäß der Erfindung, umfasst ein Führungsrohr 6 sowie ein Kontaktrohr 7 für den Draht aus Zusatzwerkstoff. Zwischen Führungsrohr 6 und Kontaktrohr 7 ist ein Führungsschuh 8 angeordnet. Der Führungsschuh 8 weist einen Schaftteil 8a und einen Fußteil 8b auf. Das Führungsrohr 6 kann in einem Teleskoparm integriert sein, wodurch der Ausgleich von Höhenunterschieden im Verlauf des Fügestoßes besonders einfach möglich ist. Die Fokussiereinrichtung 9 und die Drahtzuführungseinrichtung 4 können relativ zueinander fest oder beweglich ausgebildet sein. Bevorzugt ist die Vorrichtung als Laserkopfmodul für einen in der Figur nicht dargestellten Roboter ausgebildet.

Zum Fügen von zwei Werkstücken wird der Laserstrahl 2 relativ zum Fügestoß bewegt, wobei der Pfeil in Figur 1 die Bewegungsrichtung des Laserstrahls 2 andeutet. Zur Nahtbildung wird die Spitze des Drahtes vom Laserstrahl 2 abgeschmolzen. Wie an sich bekannt ist, wird der Draht als Kraftelement zur Nahtführung verwendet. Bevorzugt ist dabei der Draht als mechanisches Tastelement ausgebildet, jedoch sind auch Ausführungsformen bei denen eine elektrische Abtastung erfolgt von der Erfindung umfasst. Bevorzugt wird die Drahtspitze kraftschlüssig entlang der Werkstückoberfläche, vorzugsweise entlang des Fügestoßes geführt.

Dabei ist, gemäß der Erfindung, während der Nahtbildung ein Drahteinlaufwinkel relativ zur Naht von weniger als 44 Grad, vorzugsweise weniger als 40°, 35°, 30°, 25°, 20°, 15°, 10° oder 5° eingestellt. Mit der Formulierung "Drahteinlaufwinkel relativ zur Naht" ist dabei der Winkel zwischen einem linear ausgebildeten Teil des Drahts im Bereich der Drahtspitze und einem lokalen Bereich des Fügestoßes in dem ein Abschmelzen des Drahts zur Nahtbildung erfolgt gemeint. Bei einem im Wesentlichen in einer Ebene liegenden Fügestoß lässt sich ein erfindungsgemäßer Drahteinlaufwinkel bei einer bei einem im Wesentlichen senkrecht zur Werkstückoberfläche positionierten Führungsrohr 6 durch einen Führungsschuh 8 mit einem stumpfen Winkel α zwischen dem Schaftteil 8a und dem Fußteil 8b gewährleisten. In einer weiteren in Figur 1 nicht dargestellten Ausführungsform ist der Drahteinlaufwinkel mittels der Drahtzuführungseinrichtung 4 veränderbar. Vorzugsweise kann hierzu der Führungsschuh 8 derart ausgebildet sein, dass der Winkel α zwischen dem Schaft 8a und dem Fuß 8b verändert werden kann. Hierzu kann beispielsweise eine Kulissenführung des um eine Schwenkachse bewegbaren Fuß 8b dienen. Es versteht sich, dass eine Veränderung des Drahteinlaufwinkels mittels der Drahtzuführungseinrichtung auch auf andere Weise realisierbar ist und von der Erfindung umfasst wird.

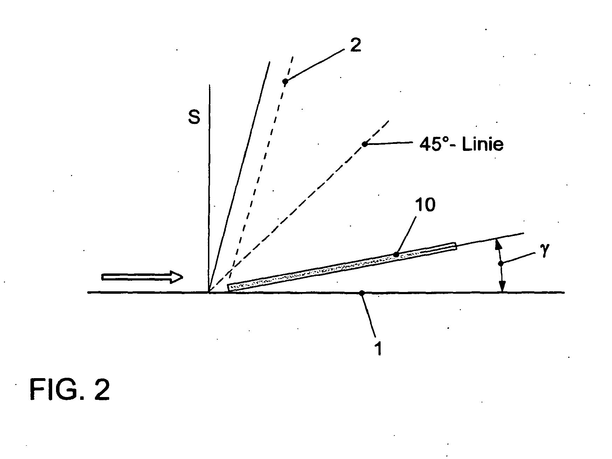

Figur 2 zeigt eine detaillierte Darstellung einer erfindungsgemäßen Vorrichtung während der Nahtbildung im Bereich der Nahtbildung. Zur Veranschaulichung der Winkelverhältnisse sind eine Senkrechte S sowie eine 45°-Linie relativ zu einem Führungsstoß 1 dargestellt. Der als mechanisches Tastelement dienende Draht 10 weist einen Drahteinlaufwinkel γ relativ zur Naht von weniger als 44° auf, wobei der Laserstrahl 2 mit einem von 90° verschiedenen Winkel relativ zur Naht beziehungsweise zum Führungsstoß auf die Werkstückoberfläche auftrifft.

Durch den flachen Drahteinlaufwinkel wird der Fügeprozess beruhigt und eine glattere Nahtoberfläche erreicht. Da durch den geringeren Winkel bedingt mehr Drahtfläche durch den Energiestrahl abgedeckt wird, ist eine Energieersparnis zu erreichen. Ferner kann mit dem erfindungsgemäßen Verfahren der Verbrauch an Zusatzmaterial vermindert werden.

Beim Schweißen einer Dachnaht zwischen einem Dach und einem Seitenteil eines Automobils konnte der Drahtvorschub bei einem Drahteinlaufwinkel von 25° auf 5,5 m/min gegenüber einem Drahtvorschub von 6,4 m/min bei einem Drahteinlaufwinkel von 45° reduziert werden. Gleichzeitig war es möglich, die eingesetzte Laserleistung bei einem Drahteinlaufwinkel von 25° auf 3.500 W gegenüber 4.000 W bei einem Drahteinlaufwinkel von 45° zu vermindern. Die geschilderten Ergebnisse wurden bei ansonsten gleichen Parametern wie Spaltbreite, Drahtmaterial und Drahtdurchmesser ermittelt.

### Bezugszeichenliste

- 1: Fügespalt mit Schnitt
- 2: Energiestrahl, Laser
- 3: Laser
- 4: Drahtzuführmodul
- 5: Positioniereinrichtung, Roboter
- 6: Führungsrohr
- 7: Kontaktrohr
- 8: Führungsschuh
- 9: Fokussiereinrichtung
- 10: Draht

## Patentansprüche

1. Verfahren zum Fügen von zumindest zwei Werkstücken, wobei in einem Bereich eines Fügestoss zwischen den Werkstücken mittels eines relativ zu einem Fügestoss mit einer vorgegebenen Fügegeschwindigkeit bewegten Energiestrahls und eines Drahts als Zusatzwerkstoff eine Naht gebildet wird und der Draht als Tastelement zur Nahtführung verwendet wird, **dadurch gekennzeichnet, dass** mittels einer Drahtzuführungseinrichtung (4), welche ein Führungsrohr (6) sowie ein Kontaktrohr (7) für den Draht aus Zusatzstoff sowie einen zwischen Führungsrohr (6) und Kontaktrohr (7) angeordneten Führungsschuh (8) mit einem Schaftteil (8a) und einem Fußteil (8b) mit einem stumpfen Winkel α zwischen dem Schaftteil (8a) und dem Fußteil (8b) umfasst, bei einem in einer Ebene liegenden Fügestoß und einem senkrecht zur Werkstückoberfläche positionierten Führungsrohr (6) während der Nahtbildung ein Drahteinlaufwinkel relativ zur Naht von weniger als 44° eingestellt wird.

2. Verfahren nach Anspruch 1, **dadurch gekennzeichnet, dass** zur Veränderung des Drahteinlaufwinkels der Winkel α zwischen dem Schaftteil (8a) und dem Fußteil (8b) verändert wird.

3. Verfahren nach Anspruch 1 oder 2, **dadurch gekennzeichnet, dass** der Drahtvorschub um mindestens 5%, vorzugsweise mindestens 10%, 15%, 20%, optimal 30%, relativ zum Drahtvorschub bei einem Drahteinlaufwinkel von 45° bei jeweils gleicher Fügegeschwindigkeit vermindert wird.

4. Verfahren nach zumindest einem der vorhergehenden Ansprüche, **dadurch gekennzeichnet, dass** die Leistung des Energiestrahls um mindestens 5%, vorzugsweise 10%, 15%, 20%, 30%, optimal 35% relativ zur Leistung bei einem Drahteinlaufwinkel von 45° bei jeweils gleicher Fügegeschwindigkeit vermindert wird.

5. Verfahren nach zumindest einem der vorhergehenden Ansprüche, **dadurch gekennzeichnet, dass** der Draht als mechanisches Tastelement verwendet wird.

6. Verfahren nach Anspruch 5, **dadurch gekennzeichnet, dass** die Drahtspitze kraftschlüssig entlang der Werkstückoberfläche geführt wird.

7. Verfahren nach Anspruch 6, **dadurch gekennzeichnet, dass** eine fest eingestellte Soll-Andruckkraft verwendet wird.

8. Vorrichtung zum Fügen von zumindest zwei Werkstücken in einem Bereich eines Fügestosses zwischen den Werkstücken mit einer Einrichtung zur Erzeugung eines Energiestrahls, einer Drahtzuführungseinrichtung für einen Draht als Zusatzstoff sowie einer Positioniereinrichtung zur Positionierung von Energiestrahl und Draht relativ zum Fügestoss, wobei mittels des relativ zum Fügestoss mit einer vorgegebenen Fügegeschwindigkeit bewegten Energiestrahls und des Drahts eine Naht gebildet und der Draht als Tastelement zur Nahtführung verwendet wird, **dadurch gekennzeichnet, dass** die Drahtzuführungseinrichtung (4) ein Führungsrohr (6) sowie ein Kontaktrohr (7) für den Draht aus Zusatzstoff umfasst, mit einem zwischen Führungsrohr (6) und Kontaktrohr (7) angeordnetem Führungsschuh (8) mit einem Schaftteil (8a) und einem Fußteil (8b) mit einem stumpfen Winkel α zwischen dem Schaftteil (8a) und dem Fußteil (8b), derart dass bei einem in einer Ebene liegenden Fügestoß und einem senkrecht zur Werkstückoberfläche positionierten Führungsrohr (6) während der Nahtbildung ein Drahteinlaufwinkel relativ zur Naht von weniger als 44° einstellbar ist

9. Vorrichtung nach Anspruch 8, **dadurch gekennzeichnet, dass** der Drahteinlaufwinkel mittels der Drahtzuführungseinrichtung veränderbar ist.

10. Vorrichtung nach Anspruch 8 oder 9 **dadurch gekennzeichnet, dass** der Draht als mechanisches Tastelement ausgebildet ist.

11. Vorrichtung nach Anspruch 10, **dadurch gekennzeichnet, dass** die Drahtspitze kraftschlüssig entlang der Werkstückoberfläche geführt wird.

12. Vorrichtung nach Anspruch 11, **dadurch gekennzeichnet, dass** eine Fokussiereinrichtung für den Energiestrahl vorgesehen ist.

13. Vorrichtung nach Anspruch 12, **dadurch gekennzeichnet, dass** Fokussiereinrichtung und Drahtzuführungseinrichtung relativ zu einander feststehend sind.

14. Vorrichtung nach Anspruch 12, **dadurch gekennzeichnet, dass** Fokussiereinrichtung und Drahtzuführungseinrichtung relativ zu einander bewegbar sind.

## Claims

1. Method for joining at least two workpieces, wherein a seam is formed in a region of a joint abutment between the workpieces by means of an energy beam, moved relative to a joint abutment at a predetermined joining rate, and a wire as filler material, and the wire is used as a scanning element for the seam tracking, **characterized in that**, by means of a wire feed device (4) which comprises a guide tube (6) and a contact tube (7) for the wire of filler material and a guide shoe (8), which is arranged between guide tube (6) and contact tube (7) and has a shank part (8a) and a foot part (8b), with an obtuse angle α between the shank part (8a) and the foot part (8b), a wire entry angle relative to the seam of less than 44° is set during the formation of the seam, with a joint abutment lying in a plane and a guide tube (6) positioned perpendicularly to the workpiece surface.

2. Method according to Claim 1, **characterized in that**, to vary the wire entry angle, the angle α between the shank part (8a) and the foot part (8b) is varied.

3. Method according to Claim 1 or 2, **characterized in that** the wire feed is reduced by at least 5%, preferably at least 10%, 15%, 20%, optimally 30%, relative to the wire feed at a wire entry angle of 45° with in each case the same joining rate.

4. Method according to at least one of the preceding claims, **characterized in that** the power of the energy beam is reduced by at least 5%, preferably 10%, 15%, 20%, 30%, optimally 35%, relative to the power at a wire entry angle of 45° with in each case the same joining rate.

5. Method according to at least one of the preceding claims, **characterized in that** the wire is used as a mechanical scanning element.

6. Method according to Claim 5, **characterized in that** the wire tip is guided frictionally along the workpiece surface.

7. Method according to Claim 6, **characterized in that** a fixedly set desired pressure force is used.

8. Apparatus for joining at least two workpieces in a region of a joint abutment between the workpieces, comprising a device for generating an energy beam, a wire feed device for a wire as filler material, and a positioning device for positioning the energy beam and the wire relative to the joint abutment, wherein a seam is formed by means of the energy beam, moved relative to the joint abutment at a predetermined joining rate, and the wire, and the wire is used as a scanning element for the seam tracking, **characterized in that** the wire feed device (4) comprises a guide tube (6) and a contact tube (7) for the wire of filler material, having a guide shoe (8) which is arranged between guide tube (6) and contact tube (7) and has a shank part (8a) and a foot part (8b), with an obtuse angle α between the shank part (8a) and the foot part (8b), in such a way that a wire entry angle relative to the seam of less than 44° can be set during the formation of the seam, with a joint abutment lying in a plane and a guide tube (6) positioned perpendicularly to the workpiece surface.

9. Apparatus according to Claim 8, **characterized in that** the wire entry angle can be varied by means of the wire feed device.

10. Apparatus according to Claim 8 or 9, **characterized in that** the wire is designed as a mechanical scanning element.

11. Apparatus according to Claim 10, **characterized in that** the wire tip is guided frictionally along the workpiece surface.

12. Apparatus according to Claim 11, **characterized in that** a focussing device is provided for the energy beam.

13. Apparatus according to Claim 12, **characterized in that** the focussing device and the wire feed device are fixed relative to one another.

14. Apparatus according to Claim 12, **characterized in that** the focussing device and the wire feed device are movable relative to one another.

## Revendications

1. Procédé de jonction d'au moins deux pièces, dans lequel un cordon est formé au niveau d'un joint entre deux pièces au moyen d'un faisceau d'énergie déplacé par rapport au joint à une vitesse prédéterminée de jonction et d'un fil servant de matériau d'apport, le fil étant utilisé comme élément de palpage pour guider le cordon,
**caractérisé en ce que**
pendant la formation du cordon, un angle d'amenée du fil de moins de 44° par rapport au cordon est établi au moyen d'un dispositif (4) de guidage de fil qui comporte un tube de guidage (6), un tube de contact (7) pour le fil de matériau d'apport ainsi qu'un sabot de guidage (8) disposé entre le tube de guidage (6) et le tube de contact (7) et doté d'une partie de tige (Sa) et d'une partie de pied (8b),
**en ce que** lorsque le joint est situé dans un plan et le tube de guidage (6) est placé perpendiculairement à la surface de la pièce, l'angle α entre la partie de tige (Sa) et la partie de pied (8b) est obtus.

2. Procédé selon la revendication 1, **caractérisé en ce que** pour modifier l'angle d'amenée de fil, l'angle α entre la partie de tige (8a) et la partie de pied (8b) est modifié.

3. Procédé selon la revendication 1 ou 2, **caractérisé en ce que** l'avancement du fil est diminué d'au moins 5 %, de préférence d'au moins 10 %, 15 %, 20 % et de manière optimale de 30 % par rapport à l'avancement du fil pour un angle d'amenée de fil de 45°, toujours à une vitesse de jonction constante.

4. Procédé selon au moins l'une des revendications précédentes, **caractérisé en ce que** la puissance de faisceau d'énergie est diminuée d'au moins 5 %, de préférence de 10 %, de 15 %, de 20 %, de 30 % et de manière optimale de 35% par rapport à la puissance qui correspond à un angle d'amenée de fil de 45°, toujours à la même vitesse de jonction.

5. Procédé selon au moins l'une des revendications précédentes, **caractérisé en ce que** le fil est utilisé comme élément mécanique de palpage.

6. Procédé selon la revendication 5, **caractérisé en ce que** la pointe du fil est guidée en correspondance mécanique sur la surface de la pièce.

7. Procédé selon la revendication 6, **caractérisé en ce qu'**il utilise une force de poussée de consigne réglée fixement.

8. Dispositif de jonction d'au moins deux pièces au niveau d'un joint entre les pièces, à l'aide d'un dispositif de formation d'un faisceau d'énergie, d'un dispositif qui amène un fil servant de matériau d'apport ainsi que d'un dispositif de positionnement qui positionne le faisceau d'énergie et le fil par rapport au joint, un cordon étant formé au moyen du faisceau d'énergie déplacé par rapport au joint à une vitesse prédéterminée de jonction et au moyen du fil, le fil étant utilisé comme élément de palpage pour le guidage du fil,
**caractérisé en ce que**
le dispositif (4) d'amenée de fil présente un tube de guidage (6) ainsi qu'un tube de contact (7) pour le fil en matériau d'apport, un sabot de guidage (8) disposé entre le tube de guidage (6) et le tube de contact (7) et doté d'une partie de tige (8a) et d'une partie de pied (8b), l'angle α entre la partie de tige (8a) et la partie de pied (8b) étant obtus, de telle sorte que lorsque le joint est situé dans un plan et que le tube de guidage (6) est placé perpendiculairement à la surface de la pièce, un angle d'amenée de fil de moins de 44° par rapport au cordon peut être établi pendant la formation du cordon.

9. Dispositif selon la revendication 8, **caractérisé en ce que** l'angle d'amenée de fil peut être modifié au moyen du dispositif d'apport de fil.

10. Dispositif selon la revendication 8 ou 9, **caractérisé en ce que** le fil est configuré comme élément mécanique de palpage.

11. Dispositif selon la revendication 10, **caractérisé en ce que** la pointe du fil est guidée en correspondance mécanique le long de la surface de la pièce.

12. Dispositif selon la revendication 11, **caractérisé en ce qu'**il présente un dispositif de focalisation du faisceau d'énergie.

13. Dispositif selon la revendication 12, **caractérisé en ce que** le dispositif de focalisation et le dispositif d'apport de fil sont fixes l'un par rapport à l'autre.

14. Dispositif selon la revendication 12, **caractérisé en ce que** le dispositif de focalisation et le dispositif d'apport de fil peuvent être déplacés l'un par rapport à l'autre.
